**Europäisches Patentamt**

**European Patent Office**

**Office européen des brevets**

(19)

(11) Veröffentlichungsnummer: **0 018 647**

**A1**

(12)

# EUROPÄISCHE PATENTANMELDUNG

(21) Anmeldenummer: 80102387.0

(22) Anmeldetag: 02.05.80

(51) Int. Cl.³: **F 16 J 15/447**
**F 16 C 33/80**

(30) Priorität: 02.05.79 PL 215353
05.01.80 PL 221237

(43) Veröffentlichungstag der Anmeldung:
12.11.80 Patentblatt 80/23

(84) Benannte Vertragsstaaten:
CH DE FR GB IT LI SE

(71) Anmelder: Przedsiebiorstwo Wdrazania i
Upowszechniania Postepu Technicznego i
Organizacyjnego Posteor Oddzial w Poznaniu
ul. Mielzynskiego 22
61-725 Poznan(PL)

(72) Erfinder: Jalynski, Jerzy
Rusa 106/7
Poznan, Os(PL)

(72) Erfinder: Rumatowski, Karol
Wielkiego Pazdziernika 7E/47
Poznan, Os(PL)

(74) Vertreter Füchsle, Klaus, Dipl.-Ing. et al,
Hoffmann . Eitle & Partner Patentanwälte
Arabellastrasse 4
D-8000 München 81(DE)

(54) Labyrinthdichtung für Lager von relativ zueinander beweglichen Maschinenteilen.

(57) Zum Transport des Schmiermittels und/oder der Verunreinigungen in Richtung mindestens einer der Stirnflächen der Labyrinthdichtung und dadurch zur Vermeidung einer Vermischung der genannten Medien umfaßt die Labyrinthdichtung Mittel zur Ausbildung mindestens eines Ausflußweges (6, 7) für das Schmiermittel und/oder für Verunreinigungen in Richtung mindestens einer der Stirnflächen der Dichtung.

Eine konkrete Lösung besteht darin, daß die Ausflußwege durch den Labyrinthspalt (5) und zusätzliche Kanäle (6, 7) gebildet sind.

Eine andere Konstruktionsvariante besteht darin, daß der Ausflußweg durch einen Labyrinthspalt (5) dargestellt ist, dessen Querschnitt symmetrisch stufenförmig, eckig oder spiralförmig ist und der in bezug auf die Symmetrieachse des Querschnittes von innen nach außen auf einem zunehmenden Durchmesser verläuft

Fig. 2.

Fig. 3.

- 1 -

Labyrinthdichtung für Lager von relativ zueinander
beweglichen Maschinenteilen

Die Erfindung betrifft eine Labyrinthdichtung für
Lager von relativ zueinander beweglichen Maschinenteilen, insbesondere zur Abdichtung von Wälzlagern
in Förderern, Werkzeugmaschinen, Pumpen, Elektromotoren und dergleichen.

Die bisher eingesetzten Labyrinthdichtungen, die Wälzlager gegen den Austritt von Schmiermittel schützen
und das Eindringen von Verunreinigungen in die Lager
verhindern sollen, sind deswegen hauptsächlich nachteilig, weil sie eine sehr genaue Oberflächenbearbeitung erfordern.

Die bekannten Labyrinthdichtungen sind aus zwei Ringen
zusammengesetzt, die mit Nuten und Vorsprüngen vorgesehen sind. Sie bestehen aus Metallen oder Kunststoffen.
In der Einbaustellung ragen die Vorsprünge des einen,
grundsätzlich an den ortsfesten Maschinenteil anzuschraubenden Ringes in die Nuten des anderen, auf dem
beweglichen Maschinenteil, nämlich der Welle, sitzenden
Ringes hinein und bilden dadurch ein Labyrinth. Die
Wirksamkeit einer solchen Abdichtung ist von den Einbaumassen der abzudichtenden Lagerbauteile und von dem
Aufbau ihrer zwei separaten Ringe abhängig.

Aus der polnischen Patentanmeldung Nr. P.203 224 ist
eine Lagerabdichtung in Form eines Labyrinthringes
bekannt, welcher aus zwei Teilen, nämlich aus einem
Innen- und einem Außenring besteht, die aus verschiedenen Werkstoffen hergestellt sind.

Diese Ringe sind zueinander drehbar festgestellt und bilden ein untrennbares Ganzes, wobei die Form des einen Ringes eine Abbildung der Form des anderen Ringes auf der gesamten Labyrinthoberfläche darstellt. Der Labyrinthring ist mittels des Außenringes in das Lagergehäuse und gleichzeitig auf die Welle mittels des Innenringes aufgepreßt. Allerdings ergibt die starre Befestigung des Außenringes in dem Gehäuse und des Innenringes auf der Welle die Notwendigkeit, einen größeren Labyrinthspalt zu lassen, der über die Dichtheit der Anordnung entscheidet. Diese Notwendigkeit resultiert vor allem aus der Nichtkoaxialität der Welle und des Sitzes des Lagergehäuses, aus den Abweichungen von der Kreisform, aus den Herstellungsgenauigkeiten, aus dem Lagerschlag sowie aus der Verformung der Welle während des Betriebes.

Unter diesen Bedingungen kann einerseits eine Verminderung der Labyrinthspaltbreite zum Festfressen und zur Zerstörung der Labyrinthoberfläche der Abdichtung führen, während andererseits die Einstellung von großen Labyrinthspaltbreiten zu großen Durchtrittsflächen führt. Das abzudichtende Medium, d.h. das Schmiermittel und/oder die Verunreinigungen, kann - nach dem Eindringen in den Labyrinthspalt - nicht zu dem abgedichteten Raum zurückgelangen. Auf diese Weise entsteht ein Durchtritt, der das Austreten des Schmiermittels aus dem Lager und/oder das Eindringen der Verunreinigungen in das Lager verursacht. Die Nachteile dieser bekannten Labyrinthdichtungen bestehen in ihrer starren Befestigung, welche deren Einsatz für pendelgelagerte Wellen unmöglich macht, in einer zu großen Spaltgröße und damit großen Schmiermittelverlusten, in der nicht gegebenen Möglichkeit der automatisierten Montage sowie in der fehlenden Möglichkeit der Standardisierung der Konstruktion.

Der Erfindung liegt die Aufgabe zugrunde, die Nachteile der geschilderten bekannten Anordnungen zu beseitigen und eine Ringdichtung zu entwickeln, welche einen erzwungenen Fluß des Mediums in Richtung der Stirnflächen der Dichtung ermöglicht.

Diese Aufgabe wird erfindungsgemäß dadurch gelöst, daß Mittel zur Ausbildung mindestens eines Ausflußweges für Schmiermittel und/oder für Verunreinigungen in Richtung mindestens einer der Stirnflächen der Dichtung vorgesehen sind.

Ein weiteres wesentliches Merkmal der Erfindung besteht darin, daß der durch zwischen einem Außen- und einem Innenring gebildete Labyrinthspalt einen Querschnitt mit einer symmetrischen, abgestuften, eckigen oder spiralen Gestalt sowie mit einem zunehmenden Durchmesser der Ringansätze gegenüber deren Querschnittssymmetrieachse und in der Richtung der Ableitung des Mediums aufweist, wobei die Ringe einstückig oder/und als geteilte Elemente in Form von fest oder/und trennbar verbundenden Halbringen ausgeführt sind.

Ferner ist der Labyrinthspalt an seinem größten Durchmesser oder in diesem Bereich mit mindestens einer Stirnfläche des Lagers unmittelbar oder mittels zusätzlicher Kanäle verbunden, wodurch ein Kreislauf zum Austritt des Schmiermittels und/oder ein Kreislauf zum Ableiten der Verunreinigungen gebildet wird.

Der Außen- und der Innenring sind aus einheitlichem Werkstoff oder aus einem Schichtstoff hergestellt und bestehen in letzterem Fall mindestens aus zwei aus einem üblichen, insbesondere metallischen Werkstoff und oder aus Gummi und aus einem Kunststoff ausgeführten Schichten.

Es ist von Vorzug, die Ringe mit Umfangsvertiefungen zum Einsatz von Federeinlagen, sowie mit Ringschutzschichten auf den Stirnflächen zu versehen.

Wenn die Ringe aus einem Hartmaterial ausgeführt sind, ist es von Vorteil, mindestens eine elastische Umfangsschicht zu verwenden.

Die Auswahl der Werkstoffe für den Ring hängt von der Aggressivität des das Lager umgebenden Mediums ab.

Die wesentlichen Vorteile der erfindungsgemäßen Anordnung bestehen in der Beseitigung des negativen Einflusses der Herstellungsungenauigkeit und des Spiels bzw. der Verformung der Welle unter Last auf die Spaltgröße und die Dichtungsverhältnisse sowie in der höchstmöglichen Verminderung der Gefahr des Festfressens der Abdichtung und der Schmiermittelverluste. Außerdem erlaubt die erfindungsgemäße Lösung die Erzielung einer minimalen Spaltbreite, erhöht die Dichtigkeit, vereinfacht die Montage und schafft die Möglichkeit der Standardisierung der Dichtungsringe. Gleichzeitig ermöglicht die Konstruktion eine zwangsweise Führung des Schmiermittels und/oder der Verunreinigungen in Richtung der Stirnflächen der Dichtung.

- 5 -

Bevorzugte Ausführungsbeispiele der erfindungsgemäßen Anordnungen sind in den Zeichnungen dargestellt,
in denen zeigt

Fig. 1 einen Schnitt durch eine Abdichtungsanordnung
mit Kanälen zur Ableitung des Mediums und mit einer
inneren elastischen Schicht,

Fig. 2 einen Schnitt durch eine Abdichtungsanordnung
mit Kanälen und einer äußeren elastischen Schicht,

Fig. 3 einen Schnitt durch eine Abdichtungsanordnung,
die in Schichtform, welche elastische Ringe umfaßt,
aufgebaut ist,

Fig. 4 einen Schnitt durch eine Abdichtungsanordnung
mit einseitigen Kanälen und einer äußeren elastischen
Umfangsdichtung,

Fig. 5 einen Schnitt durch eine Abdichtungsanordnung
mit einseitigen Kanälen und elastischen Außen- und
Innendichtungen,

Fig. 6 einen Schnitt durch eine Abdichtungsanordnung
mit einem symmetrischen Stufenspalt,

Fig. 7 einen Schnitt durch eine Abdichtungsanordnung
mit einem asymmetrischen Stufenspalt;

Fig. 8 einen Schnitt durch eine Abdichtungsanordnung
in Schichtform mit einem symmetrischen Stufenspalt,

Fig. 9 einen Schnitt durch eine Abdichtungsanordnung
mit einem symmetrischen Stufen- und Formspalt sowie mit einem in Form von Halbringen ausgeführten Innenring, und

Fig. 10 einen Schnitt durch eine Abdichtungsanordnung
in symmetrischer Stufenform, die als Schichtring mit
Stirnschutzschichten ausgeführt ist.

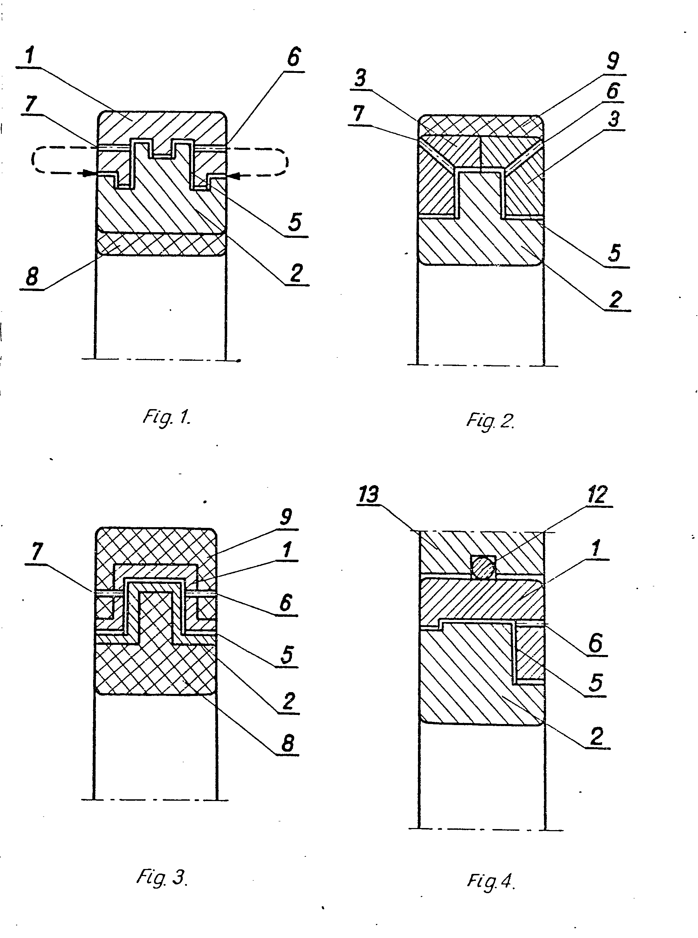

Die in Fig. 1 dargestellte Labyrinthdichtung besteht
aus einem drehbar und unlösbar auf dem Innenring 2
gesetzten Außenring 1, wobei der Außenring 1 auf
seiner Innenfläche und der Innenring 2 auf seiner
Außenfläche eine Labyrinthform aufweisen. Dadurch
wird in der Montagestellung zwischen dem Außenring 1
und dem Innenring 2 ein Labyrinthspalt 5 gebildet.
Gleichzeitig ist der Außenring 1 mit zusätzlichen
Kanälen 6 und 7 versehen, die zusammen mit dem
Labyrinthspalt 5 Ausflußwege für das Schmiermittel
(z.B. Kanal 6) sowie für das Wasser und die Verunreinigungen (z.B. Kanal 7) bilden. Außerdem umfaßt
die Anordnung eine elastische Außenschicht 8, die an
der Innenfläche des Innenrings 2 angeordnet ist.

Die in Fig. 2 dargestellte Anordnung umfaßt eine auf
der Außenfläche des Außenrings 1 angeordnete elastische
Außenschicht 9 und die Ableitkanäle 6 und 7 für das
Schmiermittel und für das Wasser und die Verunreinigungen sind zu der Drehachse unter einem gewissen
Winkel geneigt. Der Außenring ist aus herstellungstechnischen Gründen durch zwei äußere Halbringe 3
gebildet.

Die in Fig. 3 dargestellte Anordnung umfaßt eine der
Innenfläche des Innenrings 2 zugeordnete elastische Innenschicht 8 und eine der Außenfläche des Außenrings 1 zugeordnete elastische Außenschicht 9, und der Außenring 1 und der Innenring 2 weisen auf ihren beiden zugeordneten Umfangsflächen einen Umriß zur Bildung des Labyrinthspaltes 5 auf. Die Kanäle sind wieder mit 6 und 7 bezeichnet.

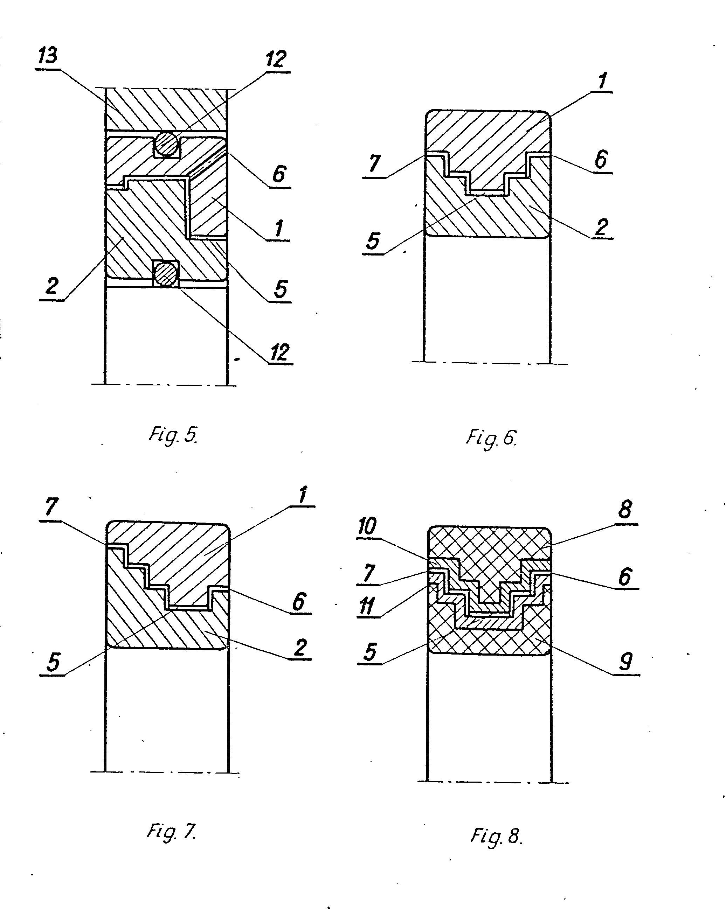

Eine Labyrinthdichtung mit lediglich einem Ableitweg 6 für das Medium, d.h. das Schmiermittel, ist in den Fig. 4 und 5 dargestellt, wobei die Anordnung gemäß Fig. 4 nur eine elastische, in dem Gehäuse 13 eingesetzte Umfangsdichtung 12 aufweist, während die Anordnung gemäß Fig. 5 zwei elastische Umfangsdichtungen 12 umfaßt, die in einer Umfangsnut des Außenrings 1 bzw. des Innenringes 2 angeordnet sind.

Ein Labyrinthspalt in Stufenform, die sich aus dem zunehmenden Durchmesser der Ansätze der Bauelemente gegenüber der Symmetrieachse des Querschnittes ergibt, ist in Fig. 6 dargestellt. Eine solche Anordnung ermöglicht eine beidseitige Dichtigkeit sowie die Ausbildung von zwei Kanälen 6 und 7 zur Ableitung des Schmiermittels sowie des Wassers und der Verunreinigungen in Richtung der Stirnflächen der Dichtung infolge der Einwirkung der Zentrifugalkraft während der Drehbewegung des bewegten Maschinenteils.

Eine symmetrische Stufenform eines Labyrinthspaltes 5 ist in Fig. 7 dargestellt. Diese Anordnung verhindert im wesentlichen in bezug auf eine Seite einen Austritt von Schmiermittel bzw. ein Eindringen von Verunreinigungen.

In Fig. 8 ist eine Schicht-Labyrinthdichtung mit einem symmetrischen stufenförmigen Querschnitt dargestellt. Die Anordnung besteht aus einer elastischen Außenschicht 8 und einer elastischen Innenschicht 9, auf welchen in bezug auf den Labyrinthspalt 5 entsprechend eine Außenlabyrinthschicht 10 und eine Innenlabyrinthschicht 11 angeordnet sind. Die elastischen Schichten 8 und 9 sind beispielsweise aus Gummi, während die Labyrinthschichten 10 und 11 aus Polyvinylchlorid oder aus Teflon ausgeführt sind.

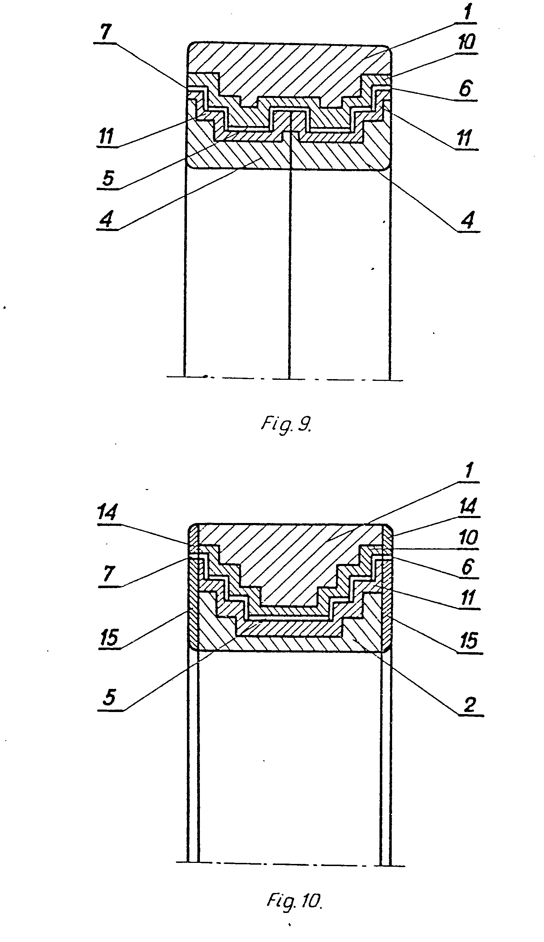

In Fig. 9 ist eine Labyrinthdichtung mit Ringen dargestellt, die in Form von Schichtelementen mit einem symmetrischen Stufen- und Formquerschnitt ausgeführt sind, wobei in der Innenfläche des Außenrings 1 in der Symmetrieachse des Querschnittes eine Vertiefung ausgebildet ist, in welcher nach dem Zusammenbau der Anordnung die den Innenring bildenden Innenhalbringe 4 fixiert sind.

In Fig. 10 ist eine Labyrinthdichtung mit einem symmetrischen Stufenquerschnitt in Schichtform mit Stirnschutzflächen 14 und 15 dargestellt, deren Einsatz sich insbesondere bei Verwendung der Dichtung in einem aggressiven Umgebungsmedium empfiehlt.

- 9 -

Patentansprüche:

1. Labyrinthdichtung für Lager von relativ zueinander beweglichen Maschinenteilen, dadurch gekennzeichnet, daß Mittel zur Ausbildung mindestens eines Ausflußweges (6, 7) für Schmiermittel und oder für Verunreinigungen in Richtung mindestens einer der Stirnflächen der Dichtung vorgesehen sind.

2. Labyrinthdichtung nach Anspruch 1, dadurch gekennzeichnet, daß die Ausflußwege durch den Labyrinthspalt (5) und zusätzliche Kanäle (6, 7) gebildet sind.

3. Labyrinthdichtung nach Anspruch 1, dadurch gekennzeichnet, daß der Ausflußweg durch einen Labyrinthspalt (5) dargestellt ist, dessen Querschnitt symmetrisch stufenförmig, eckig oder spiralförmig ist und der in bezug auf die Symmetrieachse des Querschnitts von innen nach außen auf einem zunehmenden Durchmesser verläuft.

4. Labyrinthdichtung nach Anspruch 2 oder 3, dadurch gekennzeichnet, daß die Ringe (1 und 2) einstückig oder als geteilte Elemente in Form von Halbringen (3 und 4) ausgebildet sind, die zueinander drehbar, fest oder/und lösbar angeordnet sind.

5. Labyrinthdichtung nach einem der vorhergehenden Ansprüche, dadurch gekennzeichnet, daß mindestens eine elastische Schicht (8, 9) vorgesehen ist.

6. Labyrinthdichtung nach einem der vorhergehenden Ansprüche, dadurch gekennzeichnet, daß sie mindestens eine in das Gehäuse (13) oder in eine Nut des Ringes (1 und 2) eingesetzte elastische Umfangsdichtung (12) aufweist.

7. Labyrinthdichtung nach einem der vorhergehenden Ansprüche, dadurch gekennzeichnet, daß der Außenring (1) und der Innenring (2) in einer Schichtform ausgeführt sind und mindestens je zwei Schichten (1, 9 und 2, 8) umfassen.

8. Labyrinthdichtung nach einem der vorhergehenden Ansprüche, dadurch gekennzeichnet, daß Stirnschutzschichten (14 und 15) vorgesehen sind.

- 1/3

0018647

Fig. 1.

Fig. 2.

Fig. 3.

Fig. 4.

0018647

Fig. 5.

Fig. 6.

Fig. 7.

Fig. 8.

0018647

Fig. 9.

Fig. 10.

0018647

Europäisches Patentamt

**EUROPÄISCHER RECHERCHENBERICHT**

Nummer der Anmeldung

EP 80 10 2387

| Kategorie | EINSCHLÄGIGE DOKUMENTE | betrifft Anspruch | KLASSIFIKATION DER ANMELDUNG (Int Cl ³) |
|---|---|---|---|
| | Kennzeichnung des Dokuments mit Angabe soweit erforderlich, der maßgeblichen Teile | | |
| X | FR - A - 2 389 814 (GEORG MULLER)  <br> * Seite 3, Zeile 27 - Seite 5, Zeile 24; Figuren 1-3 *  <br> -- | 1,2,4 | F 16 J 15/447 <br> F 16 C 33/80 |
| X | US - A - 2 281 905 (YOUNG)  <br> * Seite 1, linke Spalte, Zeile 54 - Seite 2, rechte Spalte, Zeile 74, Figuren 1-7 *  <br> -- | 1-4 | |
| X | US - A - 4 114 902 (ORLOWSKI)  <br> * Spalte 2, Zeile 16 - Spalte 4, Zeile 2, Figuren 1-5 *  <br> -- | 1-4,6 | RECHERCHIERTE SACHGEBIETE (Int. Cl. ³) |
| | DE - A - 1 650 083 (LEIDENFROST)  <br> * Seite 5, Spalte 2 - Seite 8, Spalte 1; Figuren 1-10 *  <br> -- | 1,2 | F 16 J 15/00 <br> F 16 C 33/00 |
| | US - A - 2 850 311 (MANSFIELD)  <br> * Spalte 1, Zeile 63 - Spalte 2, Zeile 68; Figuren 1-7 *  <br> ---- | 1,2,4, 6 | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Grunden angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-07-1980 | LEGER |

EPA form 1503.1   06.78